# EUROPÄISCHE PATENTSCHRIFT

(11) **EP 2 240 352 B1**
(45) Veröffentlichungstag und Bekanntmachung des Hinweises auf die Patenterteilung: **10.10.2012**
(21) Anmeldenummer: 09708063.4
(22) Anmeldetag: 30.01.2009
(51) Int. Cl.: B60T 13/68

(54) **PARKBREMSEINRICHTUNG**
PARKING BRAKE DEVICE
SYSTÈME DE FREIN DE PARKING

(30) Priorität: 06.02.2008 DE 102008007877
(43) Veröffentlichungstag der Anmeldung: 20.10.2010
(73) Patentinhaber: KNORR-BREMSE Systeme für Nutzfahrzeuge GmbH, 80809 München (DE)
(72) Erfinder: ZEMAN, Ferenc, H-1114 Budapest (HU)
(74) Vertreter: Schönmann, Kurt
(86) Internationale Anmeldenummer: PCT/EP2009/000607
(87) Internationale Veröffentlichungsnummer: WO 2009/098003

(56) Entgegenhaltungen:
- DE-A1-102005 058 799

## Beschreibung

Die Erfindung bezieht sich auf eine Parkbremseinrichtung gemäß dem Oberbegriff des Patentanspruches 1.

Eine derartige Parkbremseinrichtung ist aus der DE 10 2005 058 799 A1 bekannt. Dort werden Federspeicherbremszylinder über ein Relaisventil angesteuert, das seinerseits über ein 3/2-Wege-Sicherheitsventil ansteuerbar ist. Dieses Sicherheitsventil verbindet wahlweise seinen Ausgang mit einer Druckluftquelle oder Atmosphärendruck. Zweck dieser Parkbremseinrichtung ist es, dem Fahrer zu ermöglichen, bei Ausfall der elektrischen Stromversorgung durch Betätigen der Betriebsbremse die Parkbremse zu aktivieren.

Parkbremsen (auch Feststellbremse genannt) von Nutzfahrzeugen einschließlich Anhängern sowie Schienenfahrzeugen sind heute regelmäßig mit Federspeicherbremszylinder ausgestattet, die in Lösestellung einen Federkompressionsraum mit Druckluft beaufschlagen und dadurch die Feder gespannt halten, während zum Parkbremsen der Federkompressionsraum entlüftet, d.h. mit Atmosphärendruck verbunden wird, so dass der Bremszylinder unter Wirkung der Feder eine Bremskraft erzeugt (vgl. Bosch, Kraftfahrtechnisches Taschenbuch, 22. Auflage, Düsseldorf, 1995, S. 648).

Es sind sowohl rein pneumatisch betriebene Parkbremsen bekannt, die mit vom Fahrer zu betätigenden, meist bistabilen Parkbremsventilen betrieben werden, als auch elektro-pneumatische Anlagen mit einem bistabilen elektromechanischen Ventil, das durch ein elektromechanisches bistabiles Magnetventil gesteuert wird. Beide Ventilstellungen für "Parkbremse" und "Lösen" müssen dabei "stabil" sein, d.h. ohne Einwirkung einer Person in der jeweils gewählten Stellung bleiben. Dies gilt auch für einen Ausfall einer elektrischen Stromversorgung für die Magnetventile.

Aufgabe der Erfindung ist es, die Parkbremseinrichtung der eingangs genannten Art dahingehend weiter zu verbessern, dass mit handelsüblichen und robusten Bauelementen alle Anforderungen an eine Parkbremseinrichtung sicher erfüllt werden. Zu diesen Anforderungen gehören insbesondere:
- Stabilität des Systems auch bei Ausfall einer elektrischen Stromversorgung,
- sicheres und einfaches Umschalten zwischen den Betriebsarten
- Notbremseinrichtung, d.h. bei Ausfall der Betriebsbremse soll die Federspeicherbremse mit steuerbarer Bremskraft einsetzbar sein;
- es soll ein Test einer Anhängerbremse auch bei aktivierter Parkbremse eines Zugfahrzeuges möglich sein ("Trailer-Test");
- optional soll auch mit einfachen Mitteln eine Anti-Compound-Funktion realisierbar sein, d.h. es soll vermieden werden, dass die Parkbremse übermäßig beansprucht wird, wenn bei aktivierter Parkbremse gleichzeitig die Betriebsbremse wirkt.

Die oben genannte Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Bei der Erfindung ist das die Stabilität gewährleistende Element ein normales handelsübliches Ventil, wie z.B. ein pneumatisch gesteuertes Ventil, ein Servo-Ventil oder auch ein elektrisch gesteuertes Magnetventil (im folgenden "Sicherheitsventil" genannt). Das Sicherheitsventil ist über zwei Magnetventile ansteuerbar. Es steuert seinerseits über ein Select-Low-Ventil und optional zusätzlich noch über ein Select-High-Ventil das Relaisventil an, welches die Federspeicherbremse steuert. Das Sicherheitsventil ist von seiner Bauart ein monostabiles Ventil, das in einem "Rückkopplungszweig" zwischen seinem Ausgang und einem Steuereingang ein Select-Low-Ventil geschaltet hat, dem der Eingangsdruck des Sicherheitsventils zugeführt wird. Der geringere dieser beiden Drücken wird durch das Select-Low-Ventil dem Steuereingang des Sicherheitsventils zugeführt. Dadurch wird die Bistabilität erreicht. Gleichzeitig führt das Select-Low-Ventil den ausgewählten Druck auch dem Steuereingang des Relaisventils zu, welches die Federspeicherbremse steuert.

Nach einer Weiterbildung der Erfindung wird eine Anti-Compound-Funktion dadurch erreicht, dass zwischen das Select-Low-Ventil und den pneumatischen Steuereingang des Relaisventils noch ein Select-High-Ventil geschaltet wird, dessen einem Eingang der Ausgang des Select-Low-Ventils und dessen anderem Eingang der Druck der Betriebsbremse zugeführt wird. Das Select-High-Ventil wählt den höheren von beiden Drücken aus und führt diesen dem Steuereingang des Relaisventils zu. Damit ist sichergestellt, dass der Steuereingang des Relaisventils stets nur mit einem eindeutig definierten Druck beaufschlagt ist und dass die Betriebsbremse Vorrang vor der Parkbremse hat.

Die Erfindung realisiert somit die geforderten Sicherheitsfunktionen und Betriebsfunktionen einer Parkbremseinrichtung, nämlich Parken, Lösen der Parkbremse, Hilfsbremse, Anhängertest und Anti-Compound. Die Erfindung ist ausführbar mit zwei 3/2 monostabilen Magnetventilen und einem bistabilen 3/2 Magnetventil (Sicherheitsventil) und einem Select-Low-Ventil oder mit zwei 3/2 monostabilen Magnetventilen, einem 3/2 Servo-Magnetventil (Sicherheitsventil) und einem Select-Low-Ventil oder mit zwei 3/2 monostabilen Magnetventilen und einem 3/2 pneumatischem Ventil (Sicherheitsventil) und einem Select-Low-Ventil. Die Erfindung realisiert optional eine pneumatische Anti-Compound-Funktion durch ein Select-High-Ventil und eine pneumatische Verbindung mit der Betriebsbremse des Fahrzeuges oder auch eine durch Software in einem Steuergerät realisierte Anti-Compound-Funktion.

Die Erfindung verwendet eine auswählbare Anhängerparkbremsfunktion und erfüllt damit auch die Anforderungen unterschiedlicher Hersteller für unterschiedliche Anhängerbremssysteme.

Die Erfindung liefert auch den Steuerdruck für ein Anhängerbremsmodul (TCM; Trailer Control Module) über den Ausgang des bistabilen Ventils für die Anhängerbremsen, dessen Betriebsbremse aktiviert sein kann, wenn das Zugfahrzeug in der Parkposition ist.

Die Erfindung wählt weiter den Steuerdruck für das Relaisventil der Federspeicherbremse des Zugfahrzeuges von zwei TCM-Steuerleitungen über ein Select-Low-Ventil. Mit der Erfindung kann auch eine von Hand gesteuerte Proportionalbremsung mittels der Parkbremse durchgeführt werden, indem ein Magnetventil kurzfristig bzw. schnell betätigt wird, wobei ein Sensorsignal eines Drucksensors verwendet werden kann, der den Ausgangsdruck des Relaisventils mißt. Alternativ kann der Druck auch proportional unter Verwendung des genannten Magnetventils und eines zusätzlichen Haltemagnetventils gesteuert werden.

Weiter kann der gewünschte Druck einer Software basierten Anti-Compound-Funktion durch schnelles Umschalten eines zweiten Magnetventils gesteuert werden oder alternativ durch das genannte zweite Magnetventil und ein Haltemagnetventil.

Im folgenden wird die Erfindung anhand von Ausführungsbeispielen im Zusammenhang mit der Zeichnung ausführlicher erläutert. Es zeigt:
- Figur 1: ein erstes Ausführungsbeispiel der Parkbremseinrichtung nach der Erfindung;
- Figur 2: ein vereinfachtes zweites Ausführungsbeispiel der Erfindung;
- Figur 3: ein drittes Ausführungsbeispiel der Erfindung;
- Figur 4: ein viertes Ausführungsbeispiel der Erfindung;
- Figur 5: ein fünftes Ausführungsbeispiel der Erfindung;
- Figur 6: ein sechstes Ausführungsbeispiel der Erfindung; und
- Figur 7: ein siebtes Ausführungsbeispiel der Erfindung.

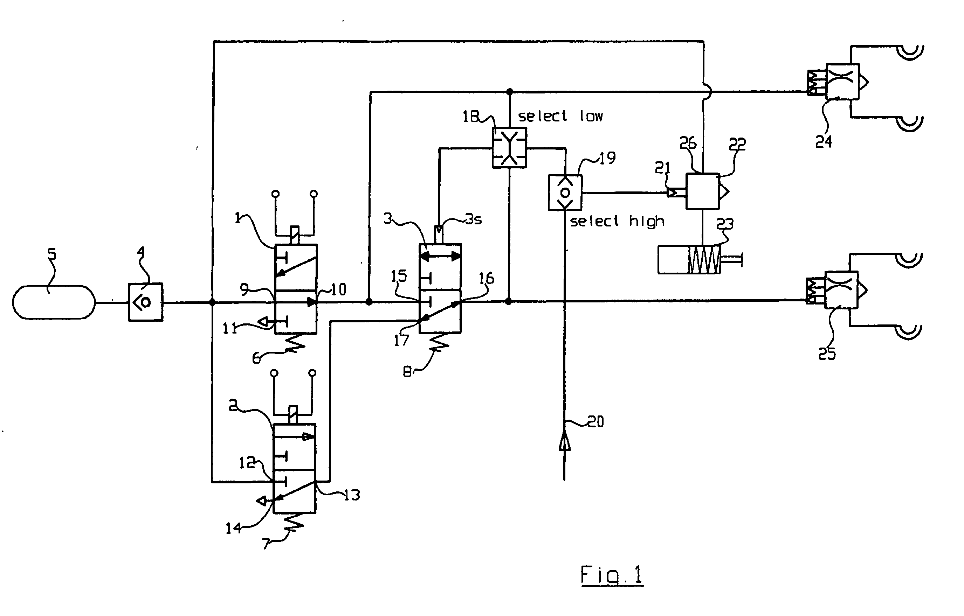

Zunächst wird auf Figur 1 Bezug genommen.

Die Parkbremseinrichtung hat ein erstes elektrisch steuerbares Magnetventil 1 und ein zweites elektrisch steuerbares Magnetventil 2, an deren Ausgängen ein pneumatisch steuerbares Sicherheitsventil 3 angeschlossen ist. Die beiden Magnetventile 1 und 2 sind über ein Rückschlagventil 4 mit einer Park-/Anhängerbremseinrichtung des Fahrzeuges verbunden, über die Druckluft zuführbar ist. In den Zeichnungen ist dies allgemeiner als Druckluftquelle, wie z.B. einen Druckluftbehätter 5, dargestellt. Beide Magnetventile 1 und 2 werden jeweils durch eine Feder 6 bzw. 7 in eine Ruhelage gebracht. Sie sind jeweils sogenannte 3/2-Wegeventile und durch die Feder 6 bzw. 7 monostabil. Ebenso wird das pneumatisch-steuerbare Sicherheitsventil 3 durch eine Feder 8 in eine Ruhelage gebracht. Das Sicherheitsventil 3 ist ebenfalls ein 3/2-Wegeventil. Es ist jedoch durch die Art seiner Verschaltung bistabil ausgelegt.

In Figur 1 sind jeweils die Ruhelagen dargestellt, bei denen die entsprechenden Ventile 1, 2 bzw. 3 deaktiviert, d.h. nicht erregt, sind. Das erste Magnetventil 1 hat einen Eingang 9, einen Ausgang 10 und einen Entlüftungsausgang 11, der mit Atmosphärendruck verbunden ist. In ähnlicher Weise hat das zweite Magnetventil 2 einen Eingang 12, einen Ausgang 13 und einen Entlüftungsausgang 14. In der dargestellten Ruhelage verbindet das Magnetventil 1 den Eingang 9 mit dem Ausgang 10 und sperrt den Entlüftungsausgang 11, während es in der aktivierten Lage den Eingang 9 absperrt und den Ausgang 10 mit dem Entlüftungsausgang 11 verbindet.

Das zweite Magnetventil 2 sperrt in der dargestellten Ruhestellung den Eingang 12 ab und verbindet den Ausgang 13 mit dem Entlüftungsausgang 14. In der erregten bzw. aktivierten Position verbindet das zweite Magnetventil 2 dagegen den Eingang 12 mit dem Ausgang 13, während der Entlüftungsausgang 14 abgesperrt ist.

Das pneumatisch-gesteuerte Sicherheitsventil 3 hat ebenfalls drei Anschlüsse und zwar einen Eingang 15, einen Ausgang 16 und einen weiteren Anschluß 17. Der Eingang 15 ist mit dem Ausgang 10 des ersten Magnetventils 1 verbunden. Der Ausgang 16 ist mit einem Eingang eines Select-Low-Ventils 18 verbunden, während der weitere Anschluß 17 mit dem Ausgang 13 des zweiten Magnetventils 2 verbunden ist.

Ein zweiter Eingang des Select-Low-Ventils 18 ist mit dem Eingang 15 des Sicherheitsventils 3 verbunden. Ein Ausgang des Select-Low-Ventils 18 ist mit einem pneumatischen Steuereingang 3s des pneumatisch steuerbaren Sicherheitsventils 3 verbunden.

Ein zweiter Ausgang des Select-Low-Ventils 18 ist mit einem Eingang eines Select-High-Ventils 19 verbunden. Ein zweiter Eingang des Select-High-Ventils 19 ist mit einer pneumatischen Leitung 20 verbunden, die eine pneumatische Steuerleitung vom Bremspedal des Fahrzeuges ist und die mit Druck der Betriebsbremse des Fahrzeuges beaufschlagt ist.

Der Ausgang des Select-High-Ventils 19 ist mit einem pneumatischen Steuereingang 21 eines Relaisventils 22 verbunden, dessen Ausgang 23 mit einer Druckkammer eines Federspeicher-Bremszylinders 23 verbunden ist. Die Federspeicherbremse ist dann gelöst, wenn die genannte Druckkammer des Federspeicher-Bremszylinders 23 mit Druckluft beaufschlagt ist. Umgekehrt ist die Parkbremse durch die Feder des Federspeicher-Bremszylinders 23 aktiviert, wenn die genannte Druckkammer entlüftet ist.

Das pneumatisch steuerbare Sicherheitsventil 3 sperrt in der abgebildeten Ruhestellung den Eingang 15 ab und verbindet den Ausgang 16 mit dem Anschluß 17. In der aktivierten Stellung des Sicherheitsventils 3 ist dagegen der Eingang 15 mit dem Ausgang 16 verbunden und der Anschluß 17 ist abgesperrt.

Schließlich ist der Ausgang 10 des ersten Magnetventils 1 noch mit einem ersten Anhängerbremsventil 24 verbunden und der Ausgang 16 des Sicherheitsventils 3 ist mit einem zweiten Anhängerbremsventil 25 verbunden. Es handelt sich dabei um die bei Zweileitungsbremsanlagen gemäß europäischer Standardausführung notwendigen Anhängerbremsventile (Trailer Module). Das Select-Low-Ventil 18 liegt somit auch zwischen den beiden Leitungen für die beiden Anhängerbremsventile 24 und 25.

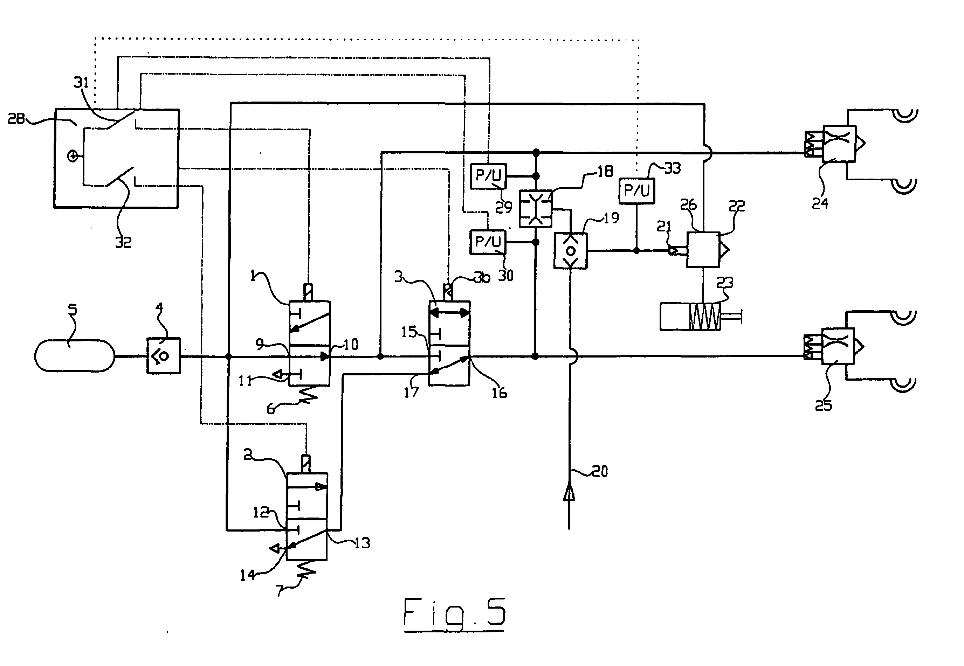

Das pneumatisch steuerbare Sicherheitsventil 3 kann ein normales Pneumatikventil sein. Es kann auch ein pneumatisch steuerbares Servo-Ventil sein. Schließlich kann das Sicherheitsventil 3 auch elektrisch steuerbar sein, d.h. es kann ein bistabiles elektrisch steuerbares Magnetventil sein, was durch das in Figur 5 gestrichelt dargestellte Sicherheitsventil 3 angedeutet ist. In diesem Falle ist dann sein elektrischer Steuereingang 3b mit elektrischen Leitungen verbunden und nicht mit einem pneumatischen Ausgang des Select-Low-Ventils 18.

Ein Versorgungseingang 26 des Relaisventils 23 ist über das Rückschlagventil 4 direkt mit der Druckluftversorgung 5 verbunden.

Im folgenden wird die Wirkungsweise der Parkbremseinrichtung der Figur 1 erläutert. Die Einrichtung hat zwei sichere, stabile Zustände, nämlich den normalen Fahrtzustand und den Zustand der aktivierten Parkbremse. Bei Ausfall der elektrischen Versorgung wird der unmittelbar dem Ausfall vorhergehende Zustand stabil beibehalten.

Über diese Sicherheitsfunktionen hinaus realisiert die Anordnung auch eine proportionale Bremsung im Fahrzustand, eine Anhängertestfunktion beim Parkzustand, eine sogenannte Anti-Compound-Funktion und die Funktionen des Umschaltens vom Parkzustand in den Fahrzustand und umgekehrt vom Fahrzustand in den Parkzustand. Die sogenannte Anti-Compound-Funktion verhindert eine Überlastung der Parkbremse, wenn bei aktivierter Parkbremsen zusätzlich die Betriebsbremse betätigt wird und somit Betriebsbremsdruck dem Federspeicher-Bremsdruck überlagert werden könnte.

Im folgenden werden die einzelnen Funktionen näher erläutert:

### Sicherheitsfunktion

Die Sicherheitsfunktion wird durch das Sicherheitsventil 3 realisiert. Dieses Sicherheitsventil 3 wird in der in Fig. 1 dargestellten Parkstellung durch die Feder 8 gehalten. Die Anschlüsse 16 und 17 des Sicherheitsventils 3 sind verbunden und über das zweite Magnetventil 2 zu dessen Entlüftungsausgang 14 hin entlüftet. Über das Select-Low-Ventil 18 wird somit Atmosphärendruck an den pneumatischen Steuereingang 3s des Sicherheitsventils 3 gelegt, so dass das Sicherheitsventil 3 deaktiviert und durch die Feder 8 in die dargestellte Stellung gebracht ist. In der Parkposition ist auf der Leitung 20 normalerweise kein Druck (Betriebsbremse deaktiviert), so dass über das Select-High-Ventil 19 ebenfalls Atmosphärendruck an den pneumatischen Steuereingang 21 des Relaisventils 22 gelangt. Dieses ist damit entlüftet, so dass auch die Federkammer des Federspeicher-Bremszylinders 23 entlüftet ist und damit die Parkbremse angelegt bzw. aktiviert ist.

Bei deaktivierter Parkbremse, d.h. beim Fahrtzustand, ist das Sicherheitsventil 3 durchgeschaltet, d.h. aktiviert. Der Eingang 15 ist über das Select-Low-Ventil 18 mit dem Ausgang 16 verbunden und über einen durch das Select-Low-Ventil 18 gebildeten Rückkopplungskreis gelangt der Druck von der Druckluftversorgung 5 über das Magnetventil 1 zum Eingang 15 und zum Ausgang 16 des Ventils 3 und damit über das Select-Low-Ventil 18 zum Steuereingang 3s, so dass auch die aktivierte Stellung des Ventils 3 stabil pneumatisch gehalten ist, solange die beiden Magnetventile 1 und 2 in ihrer dargestellten deaktivierten Position bleiben. Über das aktivierte Sicherheitsventil 3 gelangt Druck von der Druckmittelquelle 5 auch zum Steuereingang 21 des Relaisventils 22, welches durchschaltet und damit die Federkammer des Federspeicher-Bremszylinders 23 mit Druck beaufschlagt und damit die Federspeicher-Bremse löst. Somit ist die Sicherheitsfunktion realisiert, d.h. beide beschriebenen Betriebszustände sind jeweils für sich stabil, unabhängig von dem Zustand der Stromversorgung der Magnetventile 1 und 2.

### Umschalten von Parkbremsen auf Fahrzustand

Durch Betätigen des zweiten Magnetventils 2 wird dessen Eingang 12 mit dem Ausgang 13 verbunden. Damit gelangt Druckluft aus der Druckmittelquelle 5 zum Anschluß 17 des Sicherheitsventils 3 und von dessen Ausgang 16 zum Select-Low-Ventil 18, an dessen anderen Eingang ebenfalls der Druck der Druckmittelquelle 5 über das durchgeschaltete erste Magnetventil 1 liegt. Damit gelangt der hohe Druck zum Steuereingang 3s des Sicherheitsventils 3, das durchschaltet und den Eingang 15 mit dem Ausgang 16 verbindet. Über das Select-High-Ventil 19 gelangt dieser Druck an den Steuereingang 21 des Relaisventils 22, das durchschaltet und somit den Druck von seinem Eingang 26 zur Federkammer des Federspeicher-Bremszylinders 23 gelangen läßt, so dass die Federspeicher-Bremse gelöst wird. Das Sicherheitsventil 3 gelangt in die zweite, durch Druck gehaltene stabile Position.

### Umschalten vom Fahrzustand zur Parkbremse

Das Umschalten vom Fahrzustand zur Parkbremse erfolgt durch das erste Magnetventil 1. Wird dieses aktiviert, so wird sein Eingang 9 abgesperrt und sein Ausgang 10 mit dem Entlüftungsausgang 11 verbunden. Damit sinkt der Druck am Select-Low-Ventil 18 ab. Sobald dieser Druck einen vorgegebenen Schwellwert erreicht hat, der durch die Kraft der Feder 8 einstellbar ist, schaltet das Sicherheitsventil 3 in die in Figur 1 gezeigte Ruhestellung zurück. Der vorgegebene Schwellwert ist dazu erforderlich, dem System zu ermöglichen, zwischen Umschaltung auf Parkbremse und proportionalem Bremsen zu unterscheiden. Das Relaisventil 22 erhält an seinem Steuereingang 21 ebenfalls diesen niedrigen Druck. Es wird dadurch in die Entlüftungsstellung gebracht, wodurch die Federkammer des Federspeicher-Bremszylinders 23 entlüftet und damit die Parkbremse durch die Feder aktiviert wird.

### Proportionales Bremsen

Ist die Anordnung im Fahrzustand, so kann ein proportionales Bremsen über den Federspeicher-Bremszylinder 23 durch schnelles Ein- und Ausschalten des ersten Magnetventils 1 erreicht werden. Durch dieses kurzfristige Umschalten wird der Ausgang 10 auch nur kurzzeitig mit dem Entlüftungsausgang 11 verbunden und damit der Druck am Select-Low-Ventil 18 geringfügig abgesenkt. Das Sicherheitsventil 3 bleibt dabei noch in seiner stabilen Position. Das Relaisventil 22 senkt jedoch den Druck an seinem Ausgang geringfügig ab, so dass die Druckkammer des Federspeicher-Bremszylinders 23 geringfügig entlüftet wird und damit die Feder die Parkbremse geringfügig anlegt. Die Bremskraft ist damit proportional der Zeitdauer der Aktivierung des ersten Magnetventils 1. Wird der Druck durch längeres Aktivieren des ersten Magnetventils unter einen vorgegebenen Schwellwert abgesenkt, so wird die Parkbremse vollständig aktiviert.

Der entsprechende Schwellwert wird wiederum durch die Feder 8 des Sicherheitsventils 3 bestimmt. Um die proportionale Bremsfunktion über einen möglichst großen Bereich aufrechterhalten zu können, ist diese Feder 8 entsprechend schwach zu dimensionieren, damit ein vollständiges Umschalten des Sicherheitsventils 3 erst bei sehr niedrigem Druck an dessen Steuereingang 3s erfolgt.

### Trailer Test

Für die vorgeschriebene Trailer-Test-Funktion werden die Magnetventile 1 und 2 gleichzeitig aktiviert. Durch das zweite Magnetventil 2 wird der Druck von der Druckmittelquelle 5 zu dem zweiten Trailer-Modul 25 durchgeschaltet, während durch das aktivierte erste Magnetventil 1 in Verbindung mit dem Select-Low-Ventil 18 das Relaisventil 22 und das erste Trailer-Modul 24 entlüftet werden. Im Ergebnis wird die Parkbremse am Trailer gelöst, was für den Trailer-Test erforderlich ist.

### Anti-Compound-Funktion

Die Anti-Compound-Funktion wird pneumatisch durch das Select-High-Ventil 19 realisiert, das die Parkbremse des Zugfahrzeuges lösen kann, wenn Bremsdruck der Betriebsbremse über die Leitung 20 und das Select-High-Ventil 19 an den pneumatischen Steuereingang 21 des Relais 22 gelangt. Gleichzeitig kann über die Leitung 20 die nicht dargestellte Betriebsbremse aktiviert werden. Mit anderen Worten wird hierdurch erreicht, dass die Betriebsbremse Vorrang vor der Parkbremse hat.

Bei elektronischer Steuerung kann die Anti-Compound-Funktion auch durch schnelles Schalten des zweiten Magnetventils 2 erreicht werden. Aufgrund einer relativ hohen Hysterese des Sicherheitsventils 3 kann der Schaltdruckpegel für die Umschaltung von Parken auf Fahren über den vollen Lösedruck der Federkammern der Federspeicher-Bremse 23 eingestellt werden. Diese Funktion stellt sicher, dass das Sicherheitsventil 3 während eines Anti-Compound nicht in die Fahrtstellung umschaltet.

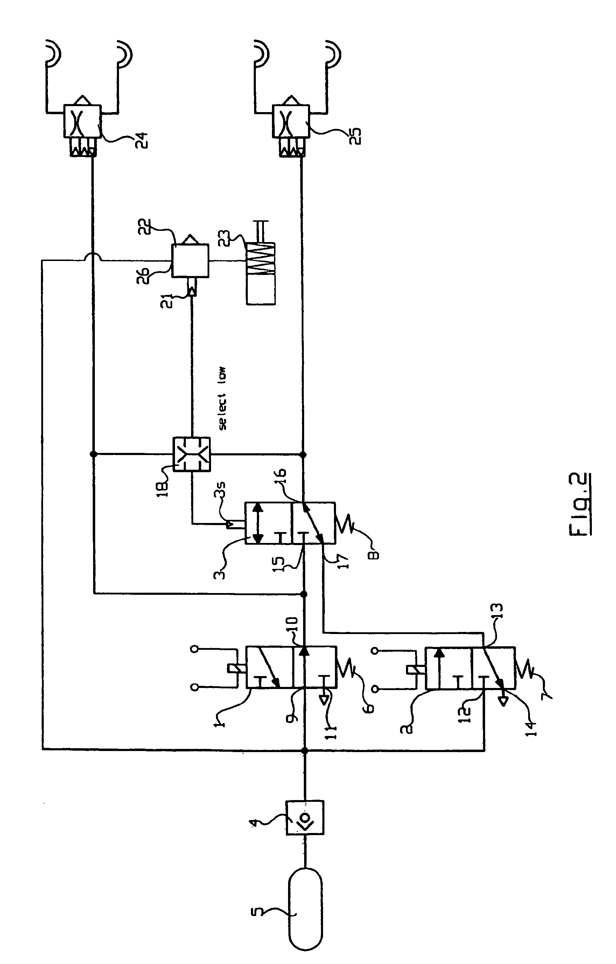

Dem Fachmann ist klar, dass an Figur 1 verschiedene Modifikationen vorgenommen werden können. Eine erste Modifikation ist in Figur 2 gezeigt. Figur 2 unterscheidet sich vom Ausführungsbeispiel der Figur 1 dadurch, dass das Select-High-Ventil 19 fortgelassen ist. Dies hat zur Folge, dass die pneumatische Anti-Compound-Funktion nicht zur Verfügung steht. Bei diesem Ausführungsbeispiel kann jedoch die Anti-Compound-Funktion elektronisch durch eine nicht dargestellte Steuerung realisiert werden in Verbindung mit der erwähnten hohen Hysterese des Sicherheitsventils 3.

Bei beiden Ausführungsbeispielen der Figuren 1 und 2 kann das Sicherheitsventil 3 durch ein Servo-Ventil ersetzt werden. Ein solches Servo-Ventil hat im Prinzip dieselbe Funktion wie das Sicherheitsventil 3, jedoch kann die Position des Ventils mit einer elektronischen Steuerung gegen den Druck in der Steuerkammer fixiert werden. Dies erlaubt dem System, eine Software gesteuerte Anti-Compound-Funktion zu realisieren, indem man das Magnetventil 2 schnell ein - und ausschaltet und das Servo-Sicherheitsventil 3 durch eine elektronische Steuerung in der Parkposition hält. Die weiteren Funktionen arbeiten wie oben beschrieben.

Bei den bisher beschriebenen Ausführungsbeispielen sind die Proportional-Bremsung und die Anti-Compound-Funktion durch schnelle Bewegungen der Magnetventile 1 und/oder 2 realisiert.

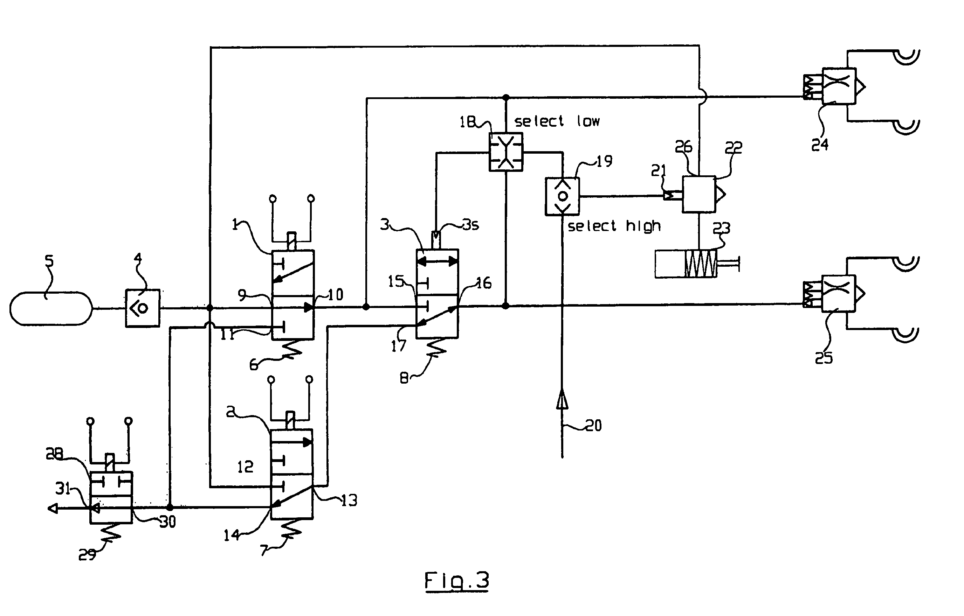

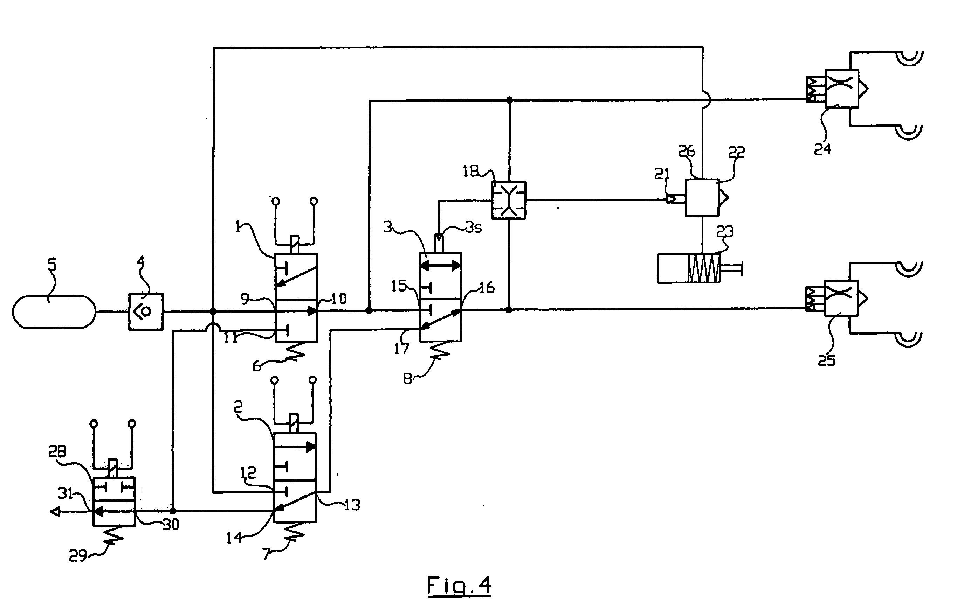

Zur Verlängerung der Lebensdauer von Magnetventilen, die je nach Bauart nur eine begrenzte Schaltzykluszeit haben, kann nach einer Weiterbildung der Erfindung, die in den Figuren 3 und 4 gezeigt ist, noch ein zusätzliches Haltemagnetventil 28 vorgesehen sein, dessen Eingang 30 mit dem Entlüftungsausgang 11 des ersten Magnetventils 1 und mit dem Entlüftungsausgang 14 des zweiten Magnetventils verbunden ist und dessen Ausgang 31 zur Atmosphäre hin entlüftet ist. In der dargestellten Ruhestellung sind der Eingang 30 und der Ausgang 31 miteinander verbunden. In der aktivierten Stellung sind Eingang 30 und Ausgang 31 gegeneinander abgesperrt. Mit diesem Ventil 28 kann das System verriegelt werden, sobald der gewünschte Druck erreicht ist. Dadurch wird die Anzahl der von den Magnetventilen 1 und 2 benötigten Zyklen wesentlich reduziert. Da das Magnetventil 28 keinen Einfluß auf die Bistabilität des Systems hat, ist diese Variante auch für die oben beschriebenen Systeme anwendbar, bei der das Sicherheitsventil 3 unterschiedliche Konfiguration haben kann, nämlich als pneumatisch gesteuertes Ventil, als Servo-Ventil oder als bistabiles Elektromagnetventil.

Auch diese Variante ist mit und ohne Select-High-Ventil 19 möglich. Figur 3 zeigt das System mit Select-High-Ventil 19 und Figur 4 ohne Select-High-Ventil. Die übrigen Funktionen sind ansonsten unverändert.

Eine weitere Modifikation besteht darin, in den Ausführungsbeispielen der Figuren 1 und 2 das pneumatisch-gesteuerte Sicherheitsventil 3 durch ein bistabiles Magnetventil 3 zu ersetzen, was in Fig. 5 dargestellt ist. Die pneumatische Steuerleitung 3s wird dann durch eine elektrische Leitung 3b ersetzt, wodurch der Aufbau einfacher wird. Durch das bistabile Elektromagnet-Sicherheitsventil 3 arbeitet die Steuerung direkter.

Figur 5 zeigt ein Ausführungsbeispiel der Erfindung, bei dem das Sicherheitsventil 3 ein bistabiles elektrisch gesteuertes Magnetventil ist. Die drei Magnetventile 1, 2 und 3 sind mit ihren elektrischen Steueranschlüssen mit einer elektronischen Steuerung 28 verbunden. Weiter sind zwei Druckspannungswandler 29 und 30 vorgesehen, von denen der eine an den Eingang 15 des Sicherheitsventils 3 und der andere an den Ausgang 16 des Sicherheitsventils 3 angeschlossen ist. Beide Druckspannungswandler 29 und 30 übermitteln ein dem Druck entsprechendes elektrisches Signal an die Steuerung 28. Die beiden Druckspannungswandler 29 und 30 messen damit die Eingangsdrücke am Select-Low-Ventil 18, worauf die elektronische Steuerung 28 ermittelt, ob das Sicherheitsventil 3 umzuschalten oder in einer seiner beiden stabilen Stellungen zu halten ist.

Anstelle der zwei Druckspannungswandler 29 und 30 kann auch nur ein einziger Druckspannungswandler 33 vorgesehen sein, der an den pneumatischen Steueranschluß 21 des Relaisventils 22 angeschlossen ist. Der dort gemessene Druck wird als elektrisches Signal der Steuerung 28 zugeführt, die dann das Sicherheitsventil 3 umschaltet oder in einer seiner beiden stabilen Stellungen hält.

Die beiden Magnetventile 1 und 2 können vom Fahrer über elektrische Schalter 31 bzw. 32, die als Taster ausgebildet sind, betätigt werden.

Die für das Sicherheitsventil 3 notwendige Hysterese kann auf elektronischem Wege durch die Steuerung 28 durch Festlegung geeigneter Schaltschwellen festgelegt werden.

Ansonsten arbeitet die Einrichtung der Figur 5 analog den vorhergehenden Ausführungsbeispielen, wobei darauf hingewiesen wird, dass auch beim Ausführungsbeispiel der Figur 5 das Select-High-Ventil 19 fortgelassen werden kann, falls die Anti-Compound-Funktion nicht benötigt wird.

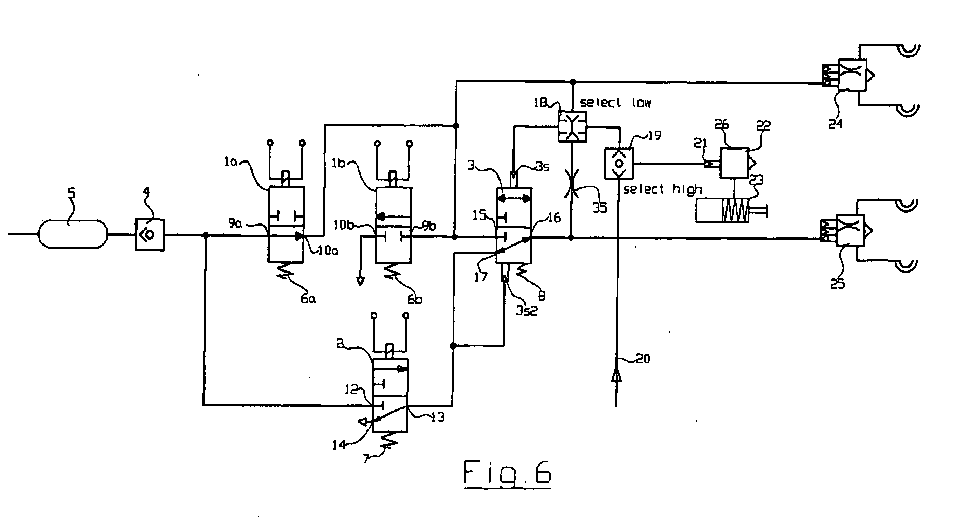

Das Ausführungsbeispiel der Figur 6 unterscheidet sich von dem der Figur 1 im wesentlichen dadurch, dass das 3/2-Wegeventil 1 durch zwei 2/2-Haltemagnetventile 1a und 1b ersetzt ist. Bei dem Ventil 1 der Figur 1 wird die Drucksteuerung durch einen "fliegenden" Betrieb des Magnetventils realisiert, was nicht in allen Fällen genau genug ist und eine hohe Standfestigkeit des Ventils erfordert.

Bei dem Ausführungsbeispiel der Figur 6 mit den zwei 2/2-Haltemagnetventilen ist kein "fliegender" Betrieb der Ventile erforderlich und die Drucksteuerung kann präziser erfolgen. Das Sicherheitsventil 3 hat bei diesem Ausführungsbeispiel einen zusätzlichen pneumatischen Steuereingang 3s2, was einen präziseren Schaltpunkt für die Parkposition gestattet.

Die 2/2-Haltemagnetvenitle 1a und 1b und das Sicherheitsventil 3 sind wie folgt verschaltet: Der Eingang 9a des Ventils 1a ist mit der Druckluftversorgung 5 verbunden und, wie bei Figur 1, mit dem Eingang 12 des Magnetventils 2. Sein Ausgang 10a ist im dargestellten Ruhezustand mit dem Eingang 9a verbunden und mit dem Eingang 15 des Sicherheitsmagnetventils 3 und auch mit einem Eingang des Select-Low-Ventils 18. Im aktivierten Zustand des Ventils 1a sind der Eingang 9a und der Ausgang 10a abgesperrt.

Das 2/2-Haltemagnetventil 1b ist mit seinem Eingang 9b mit dem Eingang 15 des Sicherheitsventils 3 verbunden. Sein Ausgang 10b ist mit Atmosphäre verbunden. In der dargestellten Ruhestellung der Figur 6 sind Eingang 9b und Ausgang 10b abgesperrt, während sie in der aktivierten Stellung des Ventils 1 b miteinander verbunden sind und damit auf "Entlüftungsstellung" stehen.

Der zusätzliche pneumatische Steuereingang 3s2 des Sicherheitsventils 3 ist mit dem weiteren Anschluß 17 des Sichefieitsventils 3 und mit dem Ausgang 13 des Ventils 2 verbunden.

Durch entsprechende Ansteuerung der Magnetventile 1a, 1b, 2 und 3 können die oben im Zusammenhang mit Figur 1 beschriebenen Funktionen ebenfalls realisiert werden.

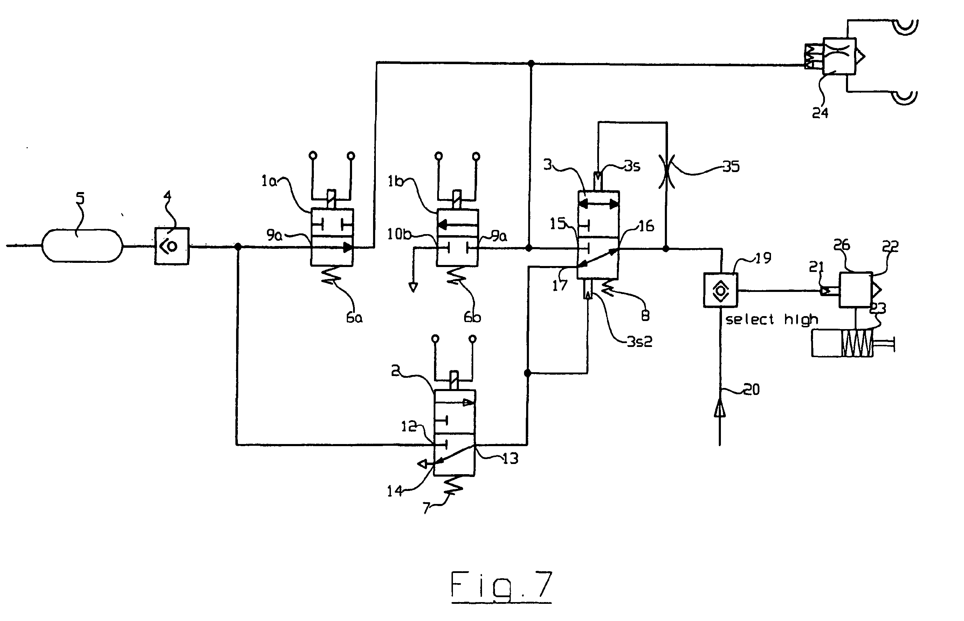

Figur 7 zeigt eine Modifikation, mit der zusätzlich eine Anhängerbremsfunktion realisiert werden kann. Mit dieser Anhängerbremsfunktion kann der Fahrer die Bremsen des Anhängers unabhängig von denen des Zugfahrzeuges betätigen, um in extremen Fahrsituationen den Fahrzeugverbund zu stabilisieren. Beispielsweise kann eine sogenannte Streckbremsung durchgeführt werden, bei der nur der Anhänger aber nicht das Zugfahrzeug gebremst wird.

Bei der in Figur 7 dargestellten Modifikation ist im Vergleich zu Figur 6 das Select-Low-Ventil fortgelassen und funktionell durch eine Drosselstelle 35 ersetzt. Auch ist das zweite Anhängerbremsventil 25 fortgelassen. Der Ausgang 16 des Sicherheitsventils 3 ist über eine Drosselstelle 35 mit dem pneumatischen Steuereingang 3s des Sicherheitsventils 3 verbunden. Weiter ist der Ausgang 16 des Sicherheitsventils 3 direkt mit einem Anschluß des Select-High-Ventils 19 verbunden. Das Sicherheitsventil 3 hat, wie bei dem Ausführungsbeispiel der Fig. 6, zwei pneumatische Steuereingänge 3s und 3s2, die entgegengesetzt wirken.

Der erste (in Fig. 7 obere) pneumatische Steuereingang 3s ist über die Drosselstelle 35 mit dem Ausgang des Sicherheitsventils 3 verbunden. Der zweite pneumatische Steuereingang 3s2 ist, wie bei Fig. 6, mit dem zweiten Eingang 17 verbunden. Die Drosselstelle 35 hat die Wirkung, dass der Druck am Steuereingang 3s zeitlich dem Druck am Ausgang 16 nacheilt.

Bei dieser Anordnung der Figur 7 werden die Anhängerbremsfunktion und die Parkbremsfunktion durch folgende Schaltstellungen realisiert:

Sind das Magnetventil 1a in Halteposition, das Magnetventil 1b in Entlüftungsposition und das Magnetventil 2 in Belüftungsstellung, so steigt aufgrund der Drosselstelle 35 der Druck am pneumatischen Steuereingang 3s des Sicherheitsventils 3 langsamer an als am unteren pneumatischen Steuereingang 3s2. Damit geht das Sicherheitsventil 3 in die dargestellte Stellung und das Relaisventil 26 wird an seinem pneumatischen Steuereingang 21 über das Select-High-Ventil 19 mit Druck beaufschlagt, so dass die Parkbremse gelöst ist. Über das in Entlüftungsstellung stehende Magnetventil 1b wird das Anhängerbremsventil 24 entlüftet und die Betriebsbremse des Anhängers ist deaktiviert.

Wird das Magnetventil 2 deaktiviert, so geht es in die in Figur 7 dargestellte Ruhestellung und entlüftet den Eingang 17 und den zweiten Steuereingang 17 des Sicherheitsventils 3. Aufgrund der Drosselstelle 35 fällt der Druck am oberen pneumatischen Steuereingang 3s des Sicherheitsventils 3 langsamer ab als an dem unteren pneumatischen Steuereingang 3s2. Dadurch schaltet das Sicherheitsventil 3 durch und verbindet den Eingang 15 mit dem Ausgang 16. Das Sicherheitsventil 3 kann dann über die beiden Ventile 1a und 1 b gesteuert werden und damit das Relaisventil 22 steuern, d.h. belüften über das Ventil 1a und entlüften über das Ventil 1b.

## Patentansprüche

1. Parkbremseinrichtung für Kraftfahrzeuge mit einem von einem Relaisventil (22) ansteuerbaren Federspeicher-Bremszylinder (23), wobei das Relaisventil (22) über ein als 3/2-Wegeventil ausgebildetes Sicherheitsventil (3) ansteuerbar ist, dessen Ausgang (16) wahlweise mit einem von zwei Eingängen (15, 17) verbindbar ist, wobei die Eingänge (15, 17) des Sicherheitsventils (3) über ein erstes oder ein zweites Magnetventil (1, 2), wahlweise mit einer Druckmittelquelle (5) oder Atmosphärendruck, verbindbar sind, **dadurch gekennzeichnet, dass** ein Select-Low-Ventil (18) mit dem einen Eingang (15) und dem Ausgang (16) des Sicherheitsventils (3) verbunden ist und ein Ausgang des Select-Low-Ventils (18) mit einem Steuereingang (21) des Relaisventils (22) verbunden ist.

2. Parkbremseinrichtung nach Anspruch 1, **dadurch gekennzeichnet, dass** das Sicherheitsventil (3) ein pneumatisch steuerbares Ventil ist, dessen Steuereingang (3s) mit einem Ausgang des Select-Low-Ventils (18) verbunden ist.

3. Parkbremseinrichtung nach Anspruch 1 oder 2, **dadurch gekennzeichnet, dass** zwischen das Select-Low-Ventil (18) und den Steuereingang (21) des Relaisventils (22) ein Select-High-Ventil (19) geschaltet ist, dessen einer Eingang mit dem Select-Low-Ventil (18) und dessen anderer Eingang mit einer Druckmittelleitung (20) einer Betriebsbremse des Fahrzeuges verbunden ist.

4. Parkbremseinrichtung nach einem der Ansprüche 1 bis 3, **dadurch gekennzeichnet, dass** das Sicherheitsventil (3) ein monostabiles pneumatisch steuerbares Ventil oder monostabiles Servo-Ventil ist, dessen monostabile Schaltstellung durch eine Feder (8) realisiert ist und dass eine zweite Schaltstellung des Sicherheitsventils (3) über das Select-Low-Ventil (18) pneumatisch stabilisiert ist.

5. Parkbremseinrichtung nach einem der Ansprüche 1 bis 4, **dadurch gekennzeichnet, dass** zwei Anhängerbremsventile (24, 25) mit je einem Eingang des Select-Low-Ventils (18) verbunden sind.

6. Parkbremseinrichtung nach einem der Ansprüche 1 bis 5, **gekennzeichnet durch** ein Haltemagnetventil (28), das mit einem Entlüftungsausgang (14) des zweiten Magnetventils (2) verbunden ist, welches mit dem zweiten Anschluß (17) des Sicherheitsventils (3) verbunden ist.

7. Parkbremseinrichtung nach einem der Ansprüche 1 bis 3, 5 oder 6, **dadurch gekennzeichnet, dass** das Sicherheitsventil ein bistabiles Elektromagnetventil (3) ist, welches elektrisch von einer elektronischen Steuerung (31) angesteuert wird, wobei beide Eingänge des Select-Low-Ventils (18) jeweils mit einem Druck-/Spannungswandler (29, 30) verbunden sind, die ein dem Druck an den Eingängen des Select-Low-Ventils (18) entsprechendes elektrisches Signal an die elektronische Steuerung (28) liefern und wobei die elektronische Steuerung (28) in Abhängigkeit von den Signalen der Druck-/Spannungswandler (29, 30) das Elektromagnet-Sicherheitsventil (3) umschaltet oder in seiner jeweiligen Stellung hält.

8. Parkbremseinrichtung nach Anspruch 1, **dadurch gekennzeichnet, dass** die Eingänge (15,17) des Sicherheitsventils (3) über das zweite Magnetventil (2) und ein drittes Magnetventil (1b) mit Atmosphärendruck verbindbar sind, und dass ein pneumatischer Steuereingang (3s) des Sicherheitsventils (3) über das Select-Low-Ventil (18) mit dem Ausgang (16) des Sicherheitsventils (3) verbunden ist.

9. Parkbremseinrichtung nach Anspruch 8, **dadurch gekennzeichnet, dass** das Sicherheitsventil (3) zwei pneumatische Steuereingänge (3s, 3s2) für entgegengesetzte Schaltstellungen aufweist und dass der zweite pneumatische Steuereingang (3s2) mit dem zweiten Anschluß (17) des Sicherheitsventils (3) verbunden ist.

10. Parkbremseinrichtung für Kraftfahrzeuge mit einem von einem Relaisventil (22) ansteuerbaren Federspeicher-Bremszylinder (23), wobei das Relaisventil (22) über ein als 3/2-Wegeventil ausgebildetes Sicherheitsventil (3) ansteuerbar ist, dessen Ausgang (16) wahlweise mit einem von zwei Eingängen (15, 17) verbindbar ist, wobei die Eingänge (15, 17) des Sicherheitsventils (3) wahlweise über ein erstes oder ein zweites Magnetventil (1, 2) mit einer Druckmittelquelle (5) oder Atmosphärendruck verbindbar sind oder über das zweite Magnetventil (2) und ein drittes Magnetventil (1 b) mit Atmosphärendruck verbindbar sind, **dadurch gekennzeichnet, dass** der Ausgang (16) des Sicherheitsventils (3) über eine Drosselstelle (35) mit einem pneumatischen Steuereingang (3s) des Sicherheitsventils (3) verbunden ist, wobei das Sicherheitsventil (3) einen zweiten pneumatischen Steuereingang (3s2) aufweist, der entgegengesetzt zum ersten Steuereingang (3s) wirkt und der mit dem Ausgang (13) des zweiten Magnetventils (2) verbunden ist.

## Claims

1. Parking brake device for motor vehicles, comprising a spring brake cylinder (23) controllable by a relay valve (22), wherein said relay valve (22) is controllable via a safety valve (3) configured as 3/2-way valve having an output (16) that can be connected at option to one of two inputs (15, 17), with said inputs (15, 17) of said safety valve (3) being adapted to be connected at option to a source of pressurised medium (5) or atmospheric pressure via a first or a second solenoid valve (1, 2), **characterised in that** a select-low valve (18) is connected to the first input (15) and the output (16) of said safety valve (3) and one output of said select-low valve (18) is connected to a control input (21) of said relay valve (22).

2. Parking brake device according to Claim 1, **characterised in that** said safety valve (3) is a pneumatically controllable valve whose control input (3a) is connected to an output of said select-low valve (18).

3. Parking brake device according to Claim 1 or 2, **characterised in that** a select-high valve (19) is branched between said select-low valve (18) and said control input (21) of said relay valve (22), whose first input is connected to said select-low valve (18) and whose other input is connected to a pressurised-medium line (20) of a service brake of said vehicle.

4. Parking brake device according to any of the Claims 1 to 3, **characterised in that** said safety valve (3) is a mono-stable pneumatically controllable valve or a mono-stable servo-valve whose mono-stable switching position is realised by means of a spring (8), and that a second switching position of said safety valve is pneumatically stabilised via said select-low valve (18).

5. Parking brake device according to any of the Claims 1 to 4, **characterised in that** two trailer brake valves (24, 25) are connected each to a respective input of said select-low valve (18).

6. Parking brake device according to any of the Claims 1 to 5, **characterised by** a solenoid-controlled retaining valve (28) that is connected to a bleeding output (14) of said second solenoid valve which is connected to said second connector (17) of said safety valve (3).

7. Parking brake device according to any of the Claims 1 to 3, 5 or 6, **characterised in that** said safety valve is a bistable solenoid valve (3) that is electrically controlled by an electronic controller (31), with both inputs of said select-low valve (18) being connected each to a respective pressure/voltage converter (29, 30), which supply an electrical signal corresponding to the pressure applied at the inputs of said select-low valve (18) to said electronic controller (28), and wherein said electronic controller (28) changes said solenoid safety valve (3) over or retains it in its respective position as a function of the signals of said pressure/voltage converters (29, 30).

8. Parking brake device according to Claim 1, **characterised in that** the inputs (15, 17) of said safety valve (3) are adapted to be connected to atmospheric pressure via said second solenoid valve (2) and a third solenoid valve (1b), and that a pneumatic control input (3s) of said safety valve (3) is connected via said select-low valve (18) to the output (16) of said safety valve (3).

9. Parking brake device according to Claim 8, **characterised in that** said safety valve (3) comprises two pneumatic control inputs (3s, 3s2) for opposite switching positions, and that said second pneumatic control input (3s2) is connected to said second connector (17) of said safety valve (3).

10. Parking brake device for motor vehicles comprising a spring brake cylinder (23) controllable by a relay valve (22), wherein said relay valve (22) is controllable via a safety valve (3) configured as 3/2-way valve having an output (16) that can be connected at option to one of two inputs (15, 17), with said inputs (15, 17) of said safety valve (3) being adapted to be connected at option to a source of pressurised medium (5) or atmospheric pressure via a first or a second solenoid valve (1, 2) or connected to atmospheric pressure via said second solenoid valve (2) and a third solenoid valve (1b), **characterised in that** the output (16) of said safety valve (3) is connected via a throttle site (35) to a pneumatic control input (3s) of said safety valve (3), with said safety valve (3) comprising a second pneumatic control input (3s2) that operates in opposition to said first control input (3s) and that is connected to the output (13) of said second solenoid valve (2).

## Revendications

1. Système de freinage de stationnement pour véhicules à moteur, comprenant un cylindre de frein à ressort (23) commandable par une valve relais (22), dans lequel ladite valve relais (22) est commandable via une soupape de sûreté (3) configurée sous forme d'une soupape à 3/2 voies ayant une sortie (16) qu'on peut raccorder, à choix, à une de deux entrées (15, 17), auxdites entrées (15, 17) de ladite soupape de sûreté (3) étant aptes à une connexion, à choix, à source de milieu sous pression (5) ou à la pression atmosphérique via une première ou une deuxième électrovanne (1, 2), **caractérisé en ce qu'**une soupape à sélection de niveau bas (18) est raccordée à la première entrée (15) et la sortie (16) de ladite soupape de sûreté (3) et une sortie de ladite soupape à sélection de niveau bas (18) est reliée à une entrée de commande (21) de ladite valve relais (22).

2. Système de freinage de stationnement selon la revendication 1, **caractérisé en ce que** ladite soupape de sûreté (3) est une soupape à commande pneumatique, dont l'entrée de commande (3a) est raccordée à une sortie de ladite soupape à sélection de niveau bas (18).

3. Système de freinage de stationnement selon la revendication 1 ou 2, **caractérisé en ce qu'**une soupape à sélection de niveau haut (19) est montée entre ladite soupape à sélection de niveau bas (18) et ladite entrée de commande (21) de ladite valve relais (22), dont la première entrée est reliée à ladite soupape à sélection de niveau bas (18) et dont l'autre entrée est reliée à une conduite du milieu sous pression (20) d'un frein de service dudit véhicule.,

4. Système de freinage de stationnement selon une quelconque des revendications 1 à 3, **caractérisé en ce que** ladite soupape de sûreté (3) est une soupape mono-stabile à commande pneumatique ou une servovalve mono-stabile, dont la position mono-stabile de commutation est réalisée moyennant un ressort (8), et **en ce qu'**une deuxième position de commutation de ladite soupape de sûreté est réalisée de façon pneumatique via ladite soupape à sélection de niveau bas.

5. Système de freinage de stationnement selon une quelconque des revendications 1 to 4, **caractérisé en ce que** deux soupapes de frein de remorque (24, 25) sont reliées chacune à une entrée respective de ladite soupape à sélection de niveau bas (18).

6. Système de freinage de stationnement selon une quelconque des revendications 1 à 5, **caractérisé par** une soupape de retenue à commande magnétique (28), qui est reliée à une sortie de désaérage (14) de ladite deuxième électrovanne, qui est reliée audit deuxième connecteur (17) de ladite soupape de sûreté (3).

7. Système de freinage de stationnement selon une quelconque des revendications 1 à 3, 5 ou 6, **caractérisé en ce que** ladite soupape de sûreté est une électrovanne bistabile (3), qui est commandée, par voie électrique, par une unité de commande électronique (31), auxdites deux entrées de ladite soupape à sélection de niveau bas (18) étant reliée chacune à un convertisseur pression/tension respectif (29, 30), qui fournissent un signal électrique en correspondance avec la pression appliquée aux entrées de ladite soupape à sélection de niveau bas (18) vers ladite unité de commande électronique (28), et dans lequel ladite unité de commande électronique (28) commute ladite électrovanne de sûreté (3) ou la retient dans la position respective en fonction des signaux desdits convertisseurs pression/tension (29, 30).

8. Système de freinage de stationnement selon la revendication 1, **caractérisé en ce que** the entrées (15, 17) de ladite soupape de sûreté (3) sont aptes à la connexion à la pression atmosphérique via ladite deuxième électrovanne (2) et une troisième électrovanne (1b), et **en ce qu'**une entrée de commande pneumatique (3s) de ladite soupape de sûreté (3) est reliée via ladite soupape à sélection de niveau bas (18) à la sortie (16) de ladite soupape de sûreté (3).

9. Système de freinage de stationnement selon la revendication 8, **caractérisé en ce que** ladite soupape de sûreté (3) comprend deux entrées de commande pneumatique (3s, 3s2) pour des positions de commutation opposées, et **en ce que** ladite deuxième entrée de commande pneumatique (3s2) est reliée audit deuxième connecteur (17) de ladite soupape de sûreté (3).

10. Système de freinage de stationnement pour véhicules à moteur comprenant un cylindre de frein à ressort (23) commandable par une valve relais (22), dans lequel ladite valve relais (22) est commandable via une soupape de sûreté (3) configurée sous forme d'une soupape à 3/2 voies, ayant une sortie (16) qu'on peut raccorder, à choix, à une de deux entrées (15, 17), auxdites entrées (15, 17) de ladite soupape de sûreté (3) étant aptes à une connexion, à choix, à une source de milieu sous pression (5) ou à la pression atmosphérique via une première ou une deuxième électrovanne (1, 2) ou la connexion à la pression atmosphérique via ladite deuxième électrovanne (2) et une troisième électrovanne (1 b), **caractérisé en ce que** la sortie (16) de ladite soupape de sûreté (3) est raccordée via une site de restriction (35) à une entrée de commande pneumatique (3s) de ladite soupape de sûreté (3), à ladite soupape de sûreté (3) comprenant une deuxième entrée de commande pneumatique (3s2), qui fonctionne en opposition à ladite première entrée de commande (3s) et qui est raccordée à la sortie (13) de ladite deuxième électrovanne (2).
